# EUROPEAN PATENT APPLICATION

(11) **EP 1 950 429 A1**
(43) Date of publication of application: **30.07.2008**
(21) Application number: 06812080.7
(22) Date of filing: 20.10.2006
(51) Int. Cl.: F15B 21/04, F16J 15/10

(54) **PRESSURE FLUID DISCHARGING DEVICE**

(30) Priority: 25.10.2005 JP 2005339423
(71) Applicant: Kosmek Ltd., Hyogo 651-2241 (JP)
(72) Inventor: YONEZAWA, Keitaro, Kobe-shi, Hyogo 651-2241 (JP); ARISATO, Akira, Kobe-shi, Hyogo 651-2241 (JP)
(74) Representative: Horton, Andrew Robert Grant
(86) International application number: PCT/JP2006/320951
(87) International publication number: WO 2007/049521

(57) **Abstract**

A female screw hole (31) is opened in an outer surface of a housing (3) of a hydraulic clamp (1), and a leg portion (40a) of a tubular casing (40) is threaded into the female screw hole (31). An annular gasket (41) is fitted to an annular groove (42) formed in a head portion (40b) of the casing (40). On an inner peripheral surface (41a) of the gasket (41), a first annular sealing portion (71) which seals an inner peripheral surface (42a) of the annular groove (42) is provided. On an annular outer end surface (41 d) of the gasket (41), a second annular sealing portion (72) which seals a peripheral wall (68) of the female screw hole (31) at the opening part of the housing (3) is provided. A diameter (D1) of the first annular sealing portion (71) is set to a value smaller than a diameter (D2) of the second annular sealing portion (72).

## Description

### Technical Field

The present invention relates to a device which discharges a pressurized fluid inside fluid equipment such as a hydraulic cylinder, a hydraulic valve, and the like to the outside, and specifically, to a technique for depressurizing or air bleeding with ease by a simple structure.

### Background of the Invention

As such a pressurized fluid discharge device, there is a conventional one described in Patent document 1 (Japanese Published Patent Application No. 04-203509).
According to the conventional technique, a female screw hole is opened in an outer surface of a housing of a hydraulic valve, an air vent plug is threaded into the female screw hole, and an opening of the female screw hole is sealed by an O-ring attached to the plug so as to be opened and closed.
Patent document 1: Japanese Published Patent Application No. 04-203509

### Summary of the Invention

### Problems to be Solved by the Invention

The above-described conventional technique has the following problems.
At the time of initial operation after completion of assembly or maintenance of a fluid system, generally an operation for bleeding air inside the hydraulic valve is performed according to the following procedures.
First, in a state where supply of pressurized oil into the hydraulic valve is stopped, the air vent plug is loosened. Then, the pressurized oil is supplied into the hydraulic valve, and the pressurized oil inside the hydraulic valve is discharged to the outside through the air vent plug, and by the pressurized oil to be discharged, the air is led to the outside. Then, after finishing the air bleeding, the supply of the pressurized oil into the hydraulic valve is stopped and the air vent plug is tightened.
Thus, it is necessary to repeat the supply and stop of the pressurized oil, so that the air bleeding operation is complicated.

To solve this problem, it is conceivable that the air vent plug is loosened in a state where the pressurized oil is supplied to the hydraulic valve to discharge the pressurized oil inside the hydraulic valve to the outside. However, in this case, when the plug is slightly loosened, the pressurized oil inside the hydraulic valve attempts to powerfully press the O-ring outward. Therefore, the O-ring may bulge out partially and be damaged.
An object of the present invention is to realize both an easier operation of discharging a pressurized fluid inside fluid equipment such as a hydraulic valve, a hydraulic cylinder, and the like, and prevention of a gasket from being damaged.

### Means for Solving the Problem

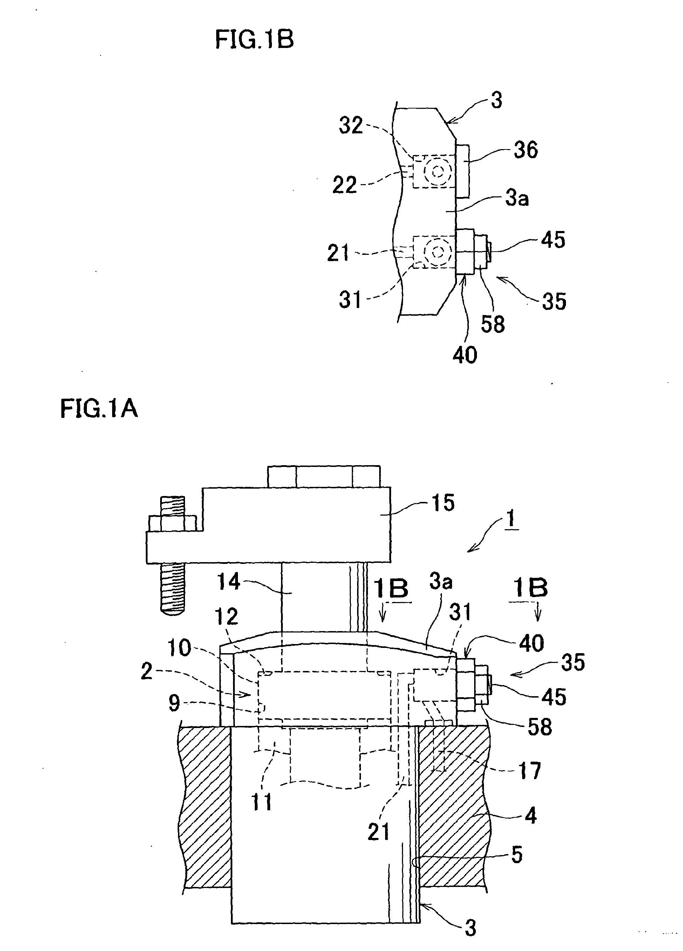

To achieve the above-described object, according to the present invention, for example, as shown in Fig. 1A to Fig. 3B, Fig. 4, Fig. 5A and Fig. 5B, or Fig. 6 respectively, the pressurized fluid discharge device is constructed as follows.

A pressurized fluid discharge device which discharges a pressurized fluid inside a housing (3) of fluid equipment (1) to the outside of the housing (3), includes a movable member (40) to be attached to a female screw hole (31) opened in an outer surface of the housing (3). The movable member (40) includes a leg portion (40a) which is threaded into the female screw hole (31) and advances and retreats in an axial direction, and a head portion (40b) having an annular groove (42) facing a peripheral wall (68) of the female screw hole (31) at the opening part of the housing (3) in the axial direction. An annular gasket (41) is fitted to the annular groove (42). A first annular sealing portion (71) which seals a groove surface of the annular groove (42) is provided on at least one of an inner peripheral surface (41a) and an annular inner end surface (41c) of the gasket (41). A second annular sealing portion (72) which seals the peripheral wall (68) of the female screw hole (31) is provided on an annular outer end surface (41d) of the gasket (41). A diameter (D1) of the first annular sealing portion (71) is set to a value smaller than a diameter (D2) of the second annular sealing portion (72).

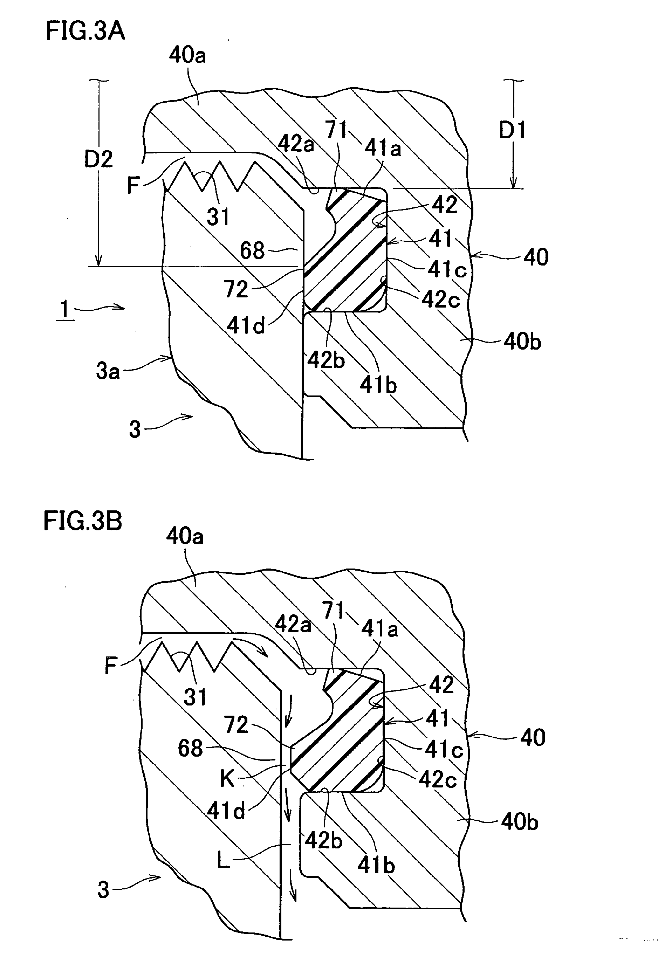

The present invention has the following function and effect as shown in, for example, Fig. 3A and Fig. 3B.
In a pressure holding state of Fig. 3A, the gasket 41 is pressed against a bottom surface 42c of the annular groove 42 by a pressure applied to an annular cross section after deduction of a cross section corresponding to the diameter (D1) from a cross section corresponding to the diameter (D2).

At the time of depressurizing of the pressurized oil or air bleeding, the movable member 40 is moved rightward with respect to the female screw hole 31 in a pressurized oil supplying state. Then, as shown in Fig. 3B, the second annular sealing portion 72 is slightly spaced from the peripheral wall 68 and a spacing gap K is formed. Therefore, the supplied pressurized oil is discharged to the outside through the spacing gap K and a lift gap L of the head portion 40b. During discharge, the gasket 41 is pressed against the bottom surface 42c of the annular groove 42 by the pressure applied to the cross section difference between the diameter (D2) and the diameter (D1) in Fig. 3A as described above. Therefore, the gasket 41 is reliably held inside the annular groove 42 and can be prevented from bulging out of the groove and falling out of the groove. Therefore, the supplied pressurized oil can be smoothly discharged, and concurrently with the discharge of the pressurized oil, air inside a fluid system can also be discharged to the outside.

As described above, according to the present invention, a discharge operation such as depressurizing or air bleeding can be performed in a state where a pressurized fluid such as pressurized oil is supplied, so that different from the conventional example described above, repeating supply and stop of the pressurized fluid is not necessary, and the discharge operation becomes easy. Further, when discharging the pressurized fluid, the gasket can be reliably held in the annular groove, so that the gasket can be prevented from being damaged.

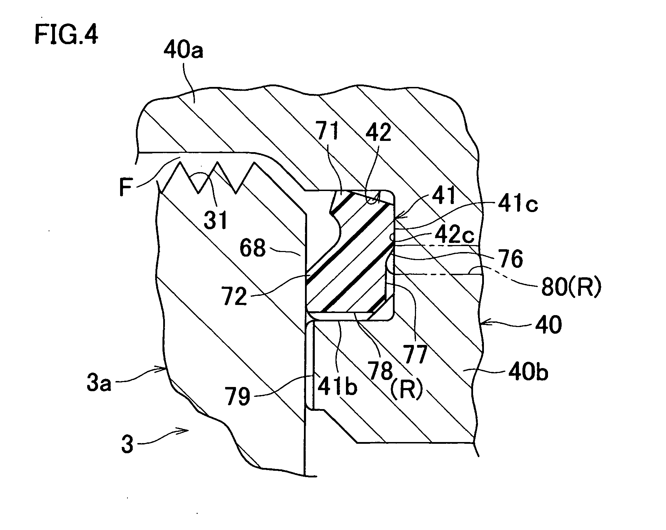

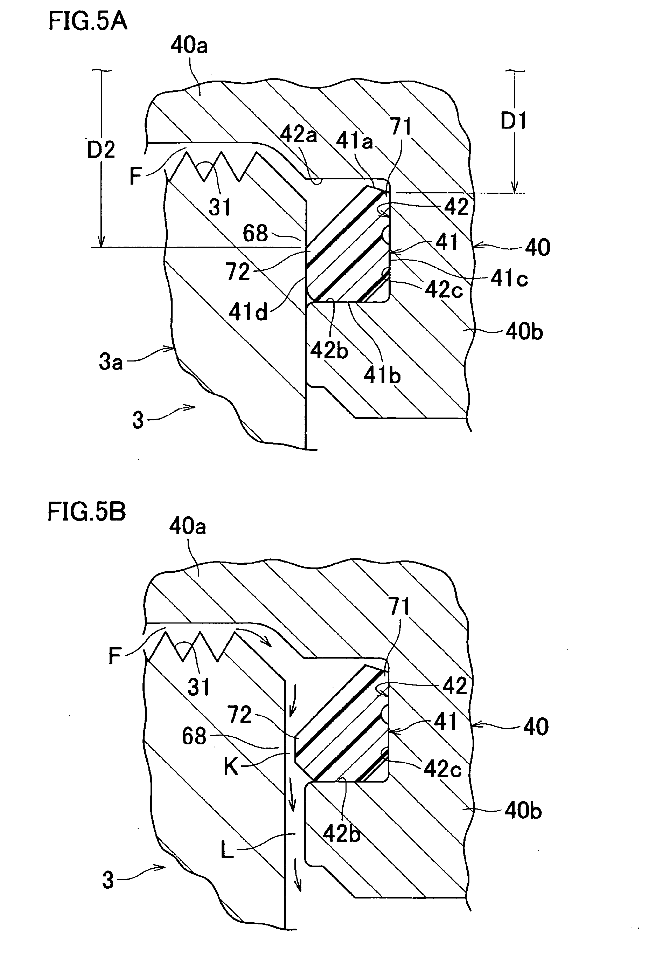

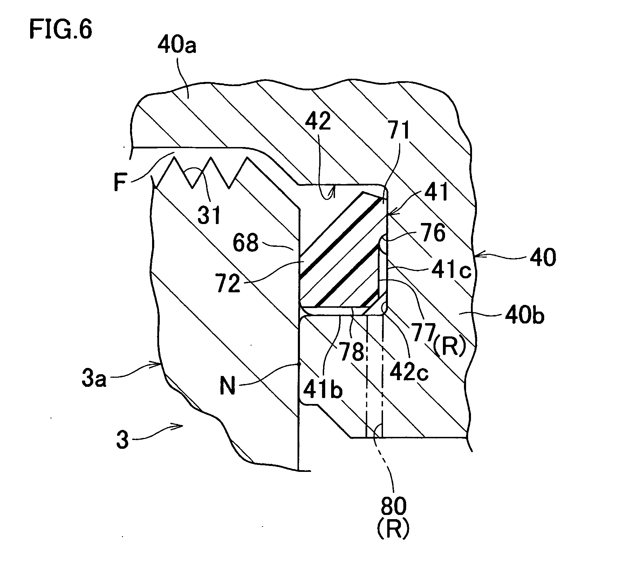

In the present invention, for example, as shown in Fig. 3A and Fig. 3B, or Fig. 4, it is preferable that, on the inner peripheral surface (41 a) of the gasket (41), the first annular sealing portion (71) is provided to seal an inner peripheral surface (42a) of the annular groove (42).
In the present invention, for example, as shown in Fig. 5A and Fig. 5B, or Fig. 6, it is preferable that, on the annular inner end surface (41c) of the gasket (41), the first annular sealing portion (71) is provided to seal a bottom surface (42c) of the annular groove (42).
Further, in each aspect of the present invention, it is preferable that the first annular sealing portion (71) contains an elastic lip.
In each aspect of the present invention, the gasket (41) may be fixed hermetically to the annular groove (42).
In each aspect of the present invention, for example, as shown in Fig. 4 or Fig. 6, it is preferable that, at a position further radially outward than the first annular sealing portion (71), the annular groove (42) is communicatively connected to the outside via an escape passage (R).

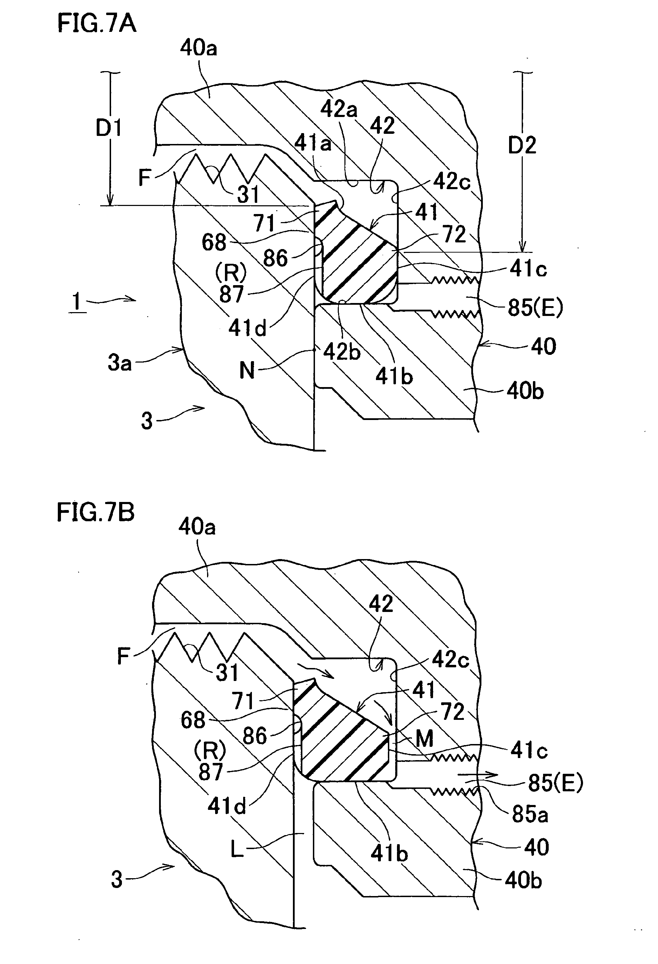

Furthermore, to achieve the above-described object, according to the present invention, for example, as shown in Fig. 7A and Fig. 7B, Fig. 8, or Fig. 9A and Fig. 9B respectively, a pressurized fluid discharge device is constructed as follows.
A pressurized fluid discharge device which discharges a pressurized fluid inside a housing (3) of fluid equipment (1) to the outside of the housing (3), includes a movable member (40) to be attached to a female screw hole (31) opened in an outer surface of the housing (3). The movable member (40) includes a leg portion (40a) which is threaded into the female screw hole (31) and advances and retreats in an axial direction, and a head portion (40b) having an annular groove (42) facing a peripheral wall (68) of the female screw hole (31) at the opening part of the housing (3) in the axial direction. An annular gasket (41) is fitted to the annular groove (42). A first annular sealing portion (71) which seals the peripheral wall (68) of the female screw hole (31) is provided on an annular outer end surface (41d) of the gasket (41). A second annular sealing portion (72) which seals a bottom surface (42c) of the annular groove (42) is provided on an annular inner end surface (41c) of the gasket (41). A diameter (D1) of the first annular sealing portion (71) is set to a value smaller than a diameter (D2) of the second annular sealing portion (72). At a position further radially outward than the second annular sealing portion (72), the annular groove (42) is communicatively connected to the outside via a discharge passage (E).

The present invention has the following function and effect as shown in, for example, Fig. 7A and Fig. 7B.
In a pressure holding state of Fig. 7A, the gasket 41 is pressed against the peripheral wall 68 of the first female screw hole 31 by a pressure applied to an annular cross section after deduction of a cross section corresponding to the diameter (D1) from a cross section corresponding to the diameter (D2).

At the time of depressurizing of the pressurized oil or air bleeding, the movable member 40 is moved rightward with respect to the female screw hole 31 in a pressurized oil supplying state. Then, as shown in Fig. 7B, the bottom surface 42c of the annular groove 42 is slightly spaced from the second annular sealing portion 72 of the gasket 41 and an opening gap M is formed. Therefore, the supplied pressurized oil is smoothly discharged to the outside through the opening gap M and the discharge passage E, and concurrently with this pressurized oil discharge, air inside a fluid system can also be discharged to the outside. During discharge, the gasket 41 is pressed against the peripheral wall 68 of the first female screw hole 31 by the pressure applied to the cross section difference between the diameter (D2) and the diameter (D1) in Fig. 7A as described above. Therefore, the gasket 41 is reliably held inside the annular groove 42 and can be prevented from bulging out of the groove and falling out of the groove.

As described above, according to the present invention, a discharge operation such as depressurizing or air bleeding can be performed in a state where a pressurized fluid such as pressurized oil is supplied, so that different from the conventional example described above, repeating supply and stop of the pressurized fluid is not necessary, and the discharge operation becomes easy. Further, when discharging the pressurized fluid, the gasket can be reliably held in the annular groove, so that the gasket can be prevented from being damaged.

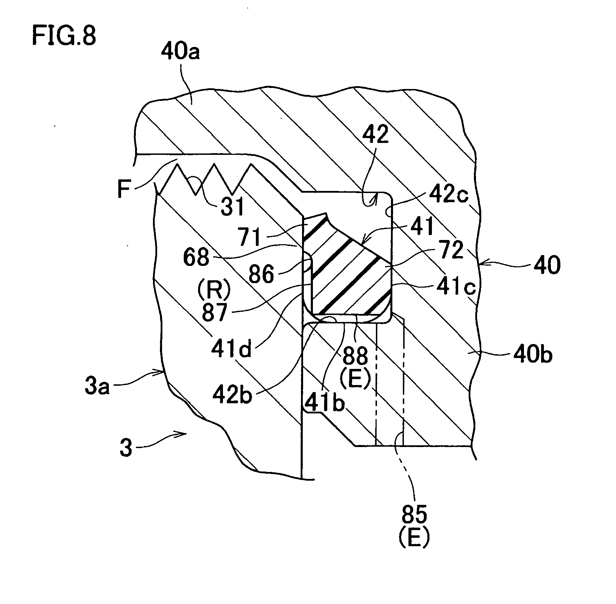

In the present invention, for example, as shown in Fig. 8, it is possible that the discharge passage (E) is formed in the head portion (40b) of the movable member (40) or in the gasket (41).
In the present invention, for example, as shown in Fig. 7A and Fig. 7B, it is preferable that at a position further radially outward than the first annular sealing portion (71), an outer surface of the gasket (41) is communicatively connected to the outside via an escape passage (R).

### Brief Description of the Drawings

Fig. 1A is an elevational view of a clamp having a flow control valve to which the present invention is applied, showing a first embodiment of the present invention, and Fig. 1B is a partial plan view taken along the line 1B-1B of Fig. 1A;
Fig. 2A is a hydraulic circuit diagram of the clamp, and Fig. 2B is a sectional view of the flow control valve attached to the clamp;
Fig. 3A is an enlarged view of an arrow 3A portion of Fig. 2B, and Fig. 3B is an actuation explanatory view similar to Fig. 3A;
Fig. 4 is a view similar to Fig. 3A, showing a first exemplary variation of the first embodiment;
Fig. 5A and Fig. 5B are views similar to Fig. 3A and Fig. 3B, respectively, showing a second exemplary variation of the first embodiment;
Fig. 6 is a view similar to Fig. 5A, showing a third exemplary variation of the first embodiment;
Fig. 7A and Fig. 7B are views similar to Fig. 3A and Fig. 3B, respectively, showing a second embodiment of the present invention;
Fig. 8 is a view similar to Fig. 7A, showing a first exemplary variation of the second embodiment; and
Fig. 9A and Fig. 9B are similar to Fig. 7A and Fig. 7B, respectively, showing a second exemplary variation of the second embodiment.

### Description of the Reference Numerals and Letters

1: fluid equipment (fluid power clamp), 3: housing, 31: female screw hole (first female screw hole), 40: movable member (tubular casing), 40a: leg portion, 40b: head portion, 41: gasket, 41a: inner peripheral surface, 41 c: inner end surface, 41d: outer end surface, 42: annular groove, 42a: inner peripheral surface, 42c: bottom surface, 68: peripheral wall of the female screw hole 31 at the opening part of the housing 3, 71: first annular sealing portion, 72: second annular sealing portion, D1: diameter of the first annular sealing portion, D2: diameter of the second annular sealing portion 72, E: discharge passage, R: escape passage

### Best Mode for Carrying Out the Invention

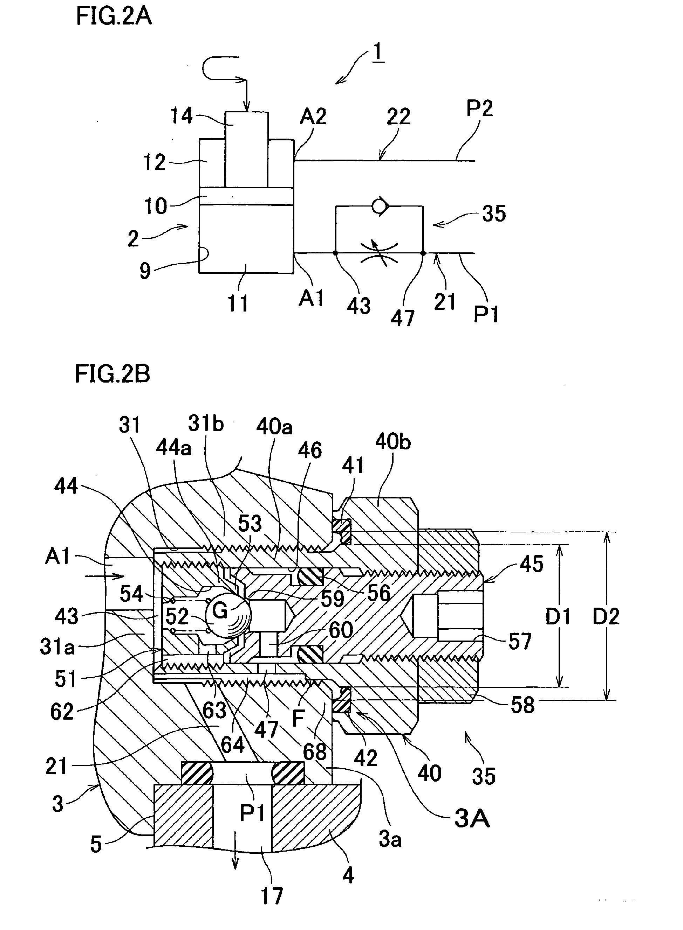

Fig. 1A to Fig. 3B show a first embodiment of the present invention, illustrating a rotary-type clamp with a flow control valve to which the present invention is applied.
First, a structure of the clamp will be described with reference to Fig. 1A, Fig. 1B, and Fig. 2A. Fig. 1A is an elevational view of the clamp in a release state. Fig. 1B is a partial plan view taken along the line 1B-1B of Fig. 1A. Fig. 2A is a circuit diagram of the clamp.

The clamp 1 has a hydraulic double-acting cylinder unit 2, and a housing 3 of the cylinder unit 2 is inserted in a installation hole 5 of a work pallet 4. A flange 3a provided on an upper portion of the housing 3 is fixed to an upper surface of the work pallet 4 by a plurality of bolts (not shown). Inside the housing 3, a cylinder hole 9 vertically extending is formed. Below a piston 10 inserted in the cylinder hole 9, a release chamber 11 is formed, and a lock chamber 12 is formed above the piston 10. To an upper portion of a clamp rod 14 projecting up and down from the piston 10, an arm 15 is fixed, and a known rotary mechanism (not shown) is connected to a lower half of the clamp rod 14.

The rotary-type clamp actuates as follows.
To clamp a work (not shown) loaded on the upper surface of the work pallet 4, in a release state of Fig. 1A, pressurized oil in the release chamber 11 is discharged to the outside via a first operation port A1, a first supply and discharge passage 21, a first pressure port P1, and an oil passage 17 inside the work pallet 4, and pressurized oil of a pressure source is supplied to the lock chamber 12 via another oil passage (not shown) inside the work pallet 4, a second pressure port P2, a second supply and discharge passage 22, and a second operation port A2, whereby the piston 10 is lowered. Accordingly, the clamp rod 14 (and arm 15) is lowered first while rotating within a horizontal plane via the rotary mechanism (not shown), and then driven to advance linearly downward.

To switch the clamp 1 in the lock state into the release state, the pressurized oil in the lock chamber 12 is discharged and the pressurized oil is supplied to the release chamber 11. Accordingly, first, the clamp rod 14 (and arm 15) at the lowered position is driven to advance linearly upward, and then returned upward while rotating.

A first female screw hole 31 communicatively connected to the first supply and discharge passage 21 is opened to an outer surface of the flange 3a, and a second female screw hole 32 communicatively connected to the second supply and discharge passage 22 is opened to the outer surface of the flange 3a. A meter-out flow control valve 35 is removably attached to the first female screw hole 31, and a plug 36 is removably attached to the second female screw hole 32. The plug 36 is structured so as to secure supply and discharge of the pressurized oil in the second supply and discharge passage 22 and prevent the pressurized oil in the second supply and discharge passage 22 from leaking to the outside through the second female screw hole 32 although the detailed structure of the plug is not shown.

A detailed structure of the flow control valve 35 will be described based on a sectional view of Fig. 2B while referring to Fig. 1A to Fig. 2A.
One end portion (end portion on the first operation port A1 side) of the first supply and discharge passage 21 is eccentrically opened in a bottom wall 31a of the first female screw hole 31. In a peripheral wall 31 b of the first female screw hole 31, the other end portion (end portion on the first pressure port P 1 side) of the first supply and discharge passage 21 is opened aslant.
A tubular casing (movable member) 40 of the flow control valve 35 is attached to the first female screw hole 31. In detail, a male screw portion of a tubular leg portion 40a of the casing 40 is screwed in the first female screw hole 31 and a left end portion (leading end portion) of the leg portion 40a is brought into contact with the bottom wall 31a. This contact portion partitions the first operation port A1 and the first pressure port P1. A head portion 40b on a right end of the casing 40 is brought into contact with an outer surface of the flange 3a via a gasket 41.

Inside the casing 40, a meter-out inlet 43 communicatively connected to the first operation port A1, a valve chamber 44, a rod chamber 46 for housing an adjusting rod 45 so as to advance and retreat in an axial direction, and a meter-out outlet 47 communicatively connected to the first pressure port P1 are formed in the recited order.

In detail, a bolt-shaped holder 51 is screwed inside a left portion of the leg portion 40a of the casing 40 and a check ball 52 is inserted in the valve chamber 44 formed inside the holder 51. A check valve seat 53 is formed on an inner peripheral surface of a peripheral wall 44a of the valve chamber 44, and the check ball 52 is brought into contact with the check valve seat 53 by a spring 54.
The valve chamber 44 and the rod chamber 46 are arranged concentrically, and the adjusting rod 45 in a bolt shape is screwed into a peripheral wall of the rod chamber 46 so as to advance and retreat, and is sealed hermetically with a packing 56. On a right end portion of the adjusting rod 45, an adjusting hole 57 into which a hexagonal wrench (not shown) is inserted is formed, and a lock nut 58 is screwed.
Further, at a central portion of a left end (leading end) of the adjusting rod 45, a throttle valve seat 59 is provided. A valve seat hole of the throttle valve seat 59 is communicatively connected to the meter-out outlet 47 via a communicating passage 60 inside the leading end portion of the adjusting rod 45.

Then, by advancing or retreating the adjusting rod 45 axially according to screw engagement, the throttle valve seat 59 is moved with respect to the check ball 52, and accordingly, a throttle gap G formed between the check ball 52 and the throttle valve seat 59 is adjusted.

The meter-out flow control valve 35 operates as follows as shown in Fig. 2A and Fig. 2B.
When pressurized oil in the first operation port A1 for release is discharged to the first pressure port P1, the pressurized oil in the first operation port A1 is discharged to the first pressure port P1 through the meter-out inlet 43, a peripheral groove 62 and a communicating hole 63 of the holder 51, the throttle gap G, a communicating passage 60 of the adjusting rod 45, the meter-out outlet 47, and a peripheral groove 64 of the leg portion 40a of the casing 40 in the recited order. To the pressurized oil to be discharged, a great flow resistance is applied during passing through the throttle gap G, so that the pressurized oil is discharged at a slow speed.

Contrary to the above-described case, when the pressurized oil is supplied from the first pressure port P1 to the first operation port A1, the pressurized oil in the first pressure port P1 is supplied to the communicating passage 60 through the peripheral groove 64 of the leg portion 40a and the meter-out outlet 47, and by the pressure thereof, the check ball 52 is spaced from the check valve seat 53. Accordingly, the pressurized oil supplied to the communicating passage 60 is smoothly supplied to the first operation port A1 though the inside of the check valve seat 53, the inside of the valve chamber 44, and the meter-out inlet 43, and smoothly supplied to the first operation port A1 by passing through an outer peripheral space of the check valve seat 53, the peripheral groove 62, and the meter-out inlet 43.

In the above-described construction, a device which discharges the pressurized oil in the release chamber 11 and in the first supply and discharge passage 21 to the outside of the housing 3 is provided. Hereinafter, a construction of this discharge device will be described based on Fig. 3A and Fig. 3B with reference to Fig. 2B. Fig. 3A is an enlarged view of an arrow 3A portion of Fig. 2B. Fig. 3B is an actuation explanatory view similar to Fig. 3A.

In the head portion 40b of the casing 40 as the movable member, an annular groove 42 is formed, and the gasket 41 is fitted to the annular groove 42. This gasket 41 is made of a synthetic resin such as urethane resin, however, it may be made of rubber, etc. Further, the annular groove 42 faces a peripheral wall 68 of the first female screw hole 31 at the opening part of the housing 3. Furthermore, between an outer peripheral surface of the leg portion 40a and an inner peripheral surface of the first female screw hole 31, a fitting gap F is formed.

On an inner peripheral surface 41a of the gasket 41, a first annular sealing portion 71 which seals an inner peripheral surface 42a of the annular groove 42 is provided. The first annular sealing portion 71 contains an elastic lip. On an annular outer end surface 41d of the gasket 41, a second annular sealing portion 72 which seals the peripheral wall 68 is provided. A diameter (D1) of the first annular sealing portion 71 is set to a value smaller than a diameter (D2) of the second annular sealing portion 72.

In a pressure holding state shown in Fig. 3A, a pressure of the pressurized oil is applied to the gasket 41 through the peripheral groove 64 (see Fig. 2B) of the leg portion 40a and the fitting gap F. In this case, the gasket 41 is pressed against a bottom surface 42c of the annular groove 42 by a pressure applied to an annular cross section after deduction of a cross section corresponding to the diameter (D1) from a cross section corresponding to the diameter (D2).

At the time of maintenance of the clamp 1 (see Fig. 2A), first, the pressurized oil in the cylinder unit 2 is discharged and a predetermined maintenance is performed, and thereafter, in a state where pressurized oil is supplied to the clamp 1, air in the cylinder unit 2 is bleeded.

Specifically, when the tubular casing 40 is loosened with respect to the first female screw hole 31 and moved rightward, as shown in Fig. 3B, the second annular sealing portion 72 is slightly spaced from the peripheral wall 68 to form a spacing gap K. Therefore, the pressurized oil supplied to the clamp 1 is discharged to the outside through the fitting gap F, the spacing gap K, and a lift gap L formed between the head portion 40b of the casing 40 and the housing 3. During discharge, the gasket 41 is pressed against the bottom surface 42c of the annular groove 42 by the pressure applied to the cross section difference between the diameter (D2) and the diameter (D1) in Fig. 3A as described above. Therefore, the gasket 41 is reliably held inside the annular groove 42 and can be prevented from bulging out of the groove or falling out of the groove. Accordingly, the pressurized oil supplied to the clamp 1 can be smoothly discharged, and concurrently with this discharge of the pressurized oil, air in the cylinder unit 2 is also discharged to the outside.

The air bleeding operation described above is performed not only at the time of maintenance but also at the time of initial operation of the clamp 1 after completion of assembly in the same manner.

Fig. 4, Fig. 5A and Fig. 5B, and Fig. 6 show exemplary variations of the first embodiment described above. In these exemplary variations, components similar to those of the first embodiment will be designated and described by the same numerals as a general rule.

Fig. 4 is a view similar to Fig. 3A, showing a first exemplary variation.
In this Fig. 4, at a position further radially outward than the first annular sealing portion 71, a groove 76 extending circumferentially and a groove 77 extending radially are formed in an inner end surface 41c of the gasket 41, and another groove 78 is formed in an outer peripheral surface 41b.

Even when the pressurized oil in the fitting gap F leaks to the bottom surface 42c of the annular groove 42 through a sealed portion of the first annular sealing portion 71, the leaked oil is discharged to the outside through the three grooves 76, 77, and 78 and a communicating groove 79 formed in a left surface of the head portion 40b in the recited order. Therefore, pressure accumulation of the bottom portion of the annular groove 42 is prevented and the gasket 41 is prevented from falling out of the annular groove 42. Specifically, the three grooves 76, 77, and 78 constitute an escape passage R.

The escape passage R is required to communicatively connect the bottom of the annular groove 42 to the outside. Therefore, it is also allowed that, instead of or in addition to providing of the grooves 77 and 78, a communicating hole 80 (see figure indicated by an alternate long and two short dashed line) is provided in the head portion 40b of the tubular casing 40, and this communicating hole 80 constitutes a part of the escape passage R.

Fig. 5A and Fig. 5B are views similar to Fig. 3A and Fig. 3B, respectively, showing a second exemplary variation of the first embodiment.
In this case, on the annular inner end surface 41c of the gasket 41, the first annular sealing portion 71 which seals the bottom surface 42c of the annular groove 42 is provided. This first annular sealing portion 71 contains an elastic lip. On the annular outer end surface 41d of the gasket 41, a second annular sealing portion 42 which seals the peripheral wall 68 of the female screw hole 31 at the opening part of the housing (3) 15 is provided. A diameter (D1) of the first annular sealing portion 71 is set to a value smaller than a diameter (D2) of the second annular sealing portion 72.

In a pressure holding state of Fig. 5A, as in the case of Fig. 3A, the gasket 41 is pressed against the bottom surface 42c of the annular groove 42 by a pressure applied to an annular cross section after deduction of a cross section corresponding to the diameter (D1) from a cross section corresponding to the diameter (D2). Therefore, at the time of pressurized oil discharge of Fig. 5B, the gasket 41 can be prevented from falling out of or bulging out of the annular groove 42.

Fig. 6 is a view similar to Fig. 5A, showing a third exemplary variation of the first embodiment.
In Fig. 6, at a position further radially outward than the first annular sealing portion 71, a groove 76 extending circumferentially and a groove 77 extending radially are formed in the inner end surface 41c of the gasket 41, and another groove 78 is formed in the outer peripheral surface 41 b.
Even when the pressurized oil in the fitting gap F leaks outward radially through a sealed portion of the first annular sealing portion 71, the leaked oil is discharged to the outside through the three grooves 76, 77, and 78 and a contact gap N between the head portion 40b and the peripheral wall 68. Specifically, the three grooves 76, 77, and 78 constitute an escape passage R.

The escape passage R is required only to have a function of communicatively connecting the annular groove 42 to the outside. Therefore, instead of or in addition to providing the groove 78, it is allowed that a communicating hole 80 (see figure indicated by a alternate long and two short dashed line) is provided in the head portion 40b of the tubular casing 40 so that the communicating hole 80 constitutes a part of the escape passage R.

The first embodiment and exemplary variations can be changed as follows.
The first annular sealing portion 71 is provided on only either the inner peripheral surface 41 a or the annular inner end surface 41 c of the gasket 41, however, instead of this, it may be provided on both of these 41 a and 41 c.
Furthermore, the elastic lip may be omitted from the first annular sealing portion 71. In this case, the gasket 41 is fixed hermetically to the annular groove 42 by bonding or baking, and the like, and this hermetical portion constitutes the first annular sealing portion 71.

Fig. 7A and Fig. 7B are views similar to Fig. 3A and Fig. 3B, respectively, showing a second embodiment of the present invention. In this second embodiment, components similar to those of the first embodiment will be designated and described by the same numerals as a general rule.

This second embodiment is different in the following point from the first embodiment.
On the annular outer end surface 41d of the gasket 41, the first annular sealing portion 71 which seals the peripheral wall 68 of the first female screw hole 31 at the opening part of the housing 3 is provided. On the annular inner end surface 41c of the gasket 41, the second annular sealing portion 72 which seals the bottom surface 42c of the annular groove 42 is provided. The diameter (D1) of the first annular sealing portion 71 is set to a value smaller than the diameter (D2) of the second annular sealing portion 72. Further, at a position further radially outward than the second annular sealing portion 72, a corner portion of the annular groove 42 is communicatively connected to the outside via a communicating hole 85 inside the head portion 40b of the tubular casing 40. That is, the communicating hole 85 constitutes a part of the discharge passage E.

In a pressure holding state of Fig. 7A, a pressure of the pressurized oil is applied to the gasket 41 through the fitting gap F. In this case, the gasket 41 is pressed against the peripheral wall 68 of the first female screw hole 31 by a pressure applied to an annular cross section after deduction of a cross section corresponding to the diameter (D1) from a cross section corresponding to the diameter (D2).
At a position further radially outward than the first annular sealing portion 71, a groove 86 extending circumferentially and a groove 87 extending radially are formed in the outer end surface 41d of the gasket 41. Even when the pressurized oil in the fitting gap F leaks radially outward through a sealed portion of the first annular sealing portion 71, the leaked oil is discharged to the outside through the two grooves 86 and 87 and a contact gap N between the head portion 40b and the peripheral wall 68 in the recited order. That is, the two grooves 86 and 87 constitute an escape passage R.

When the tubular casing 40 is loosened and moved rightward with respect to the first female screw hole 31 in a pressurized oil supplying state, as shown in Fig. 7B, the bottom surface 42c of the annular groove 42 is slightly spaced from the second annular sealing portion 72 of the gasket 41 elastically deformed leftward in the figure by the oil pressure, thereby forming an opening gap M. Therefore, the supplied pressurized oil is discharged through the fitting gap F, the opening gap M, and the communicating hole 85. During discharge, the gasket 41 is pressed against the peripheral wall 68 of the first female screw hole 31 by the pressure applied to the cross section difference between the diameter (D2) and the diameter (D1) in Fig. 7A as described above. Therefore, the gasket 41 is reliably held in the annular groove 42, and can be prevented from bulging out of the groove or falling out of the groove.
Further, it is preferable that a hose (not shown) is screwed in a female screw portion 85a of the communicating hole 85 and the hose is connected to an oil recovery tank.

Fig. 8 is a view similar to Fig. 7A, showing a first exemplary variation of the second embodiment.
In this case, instead of providing the communicating passage 85 in Fig. 7A, a groove 88 is formed in the outer peripheral surface 41b of the gasket 41. When the tubular casing 40 is loosened with respect to the first female screw hole 31 in a pressurized oil supplying state, the bottom surface 42c of the annular groove 42 is slightly spaced from the second annular sealing portion 72 to form the opening gap (see the reference letter M in Fig. 7B). Therefore, the supplied pressurized oil is discharged to the outside through the fitting gap F, the opening gap (see the reference letter M in Fig. 7B), the groove 88, and the lift gap (see the reference letter L in Fig. 7B) of the head portion 40b. That is, the groove 88 formed in the gasket 41 constitutes a part of the discharge passage E.

Further, instead of or in addition to providing the groove 88 in the outer peripheral surface 41b of the gasket 41, it is allowed that a corner portion of the annular groove 42 is communicatively connected to the outside via a communicating hole 85 (see figure indicated by an alternate long and two short dashed line).

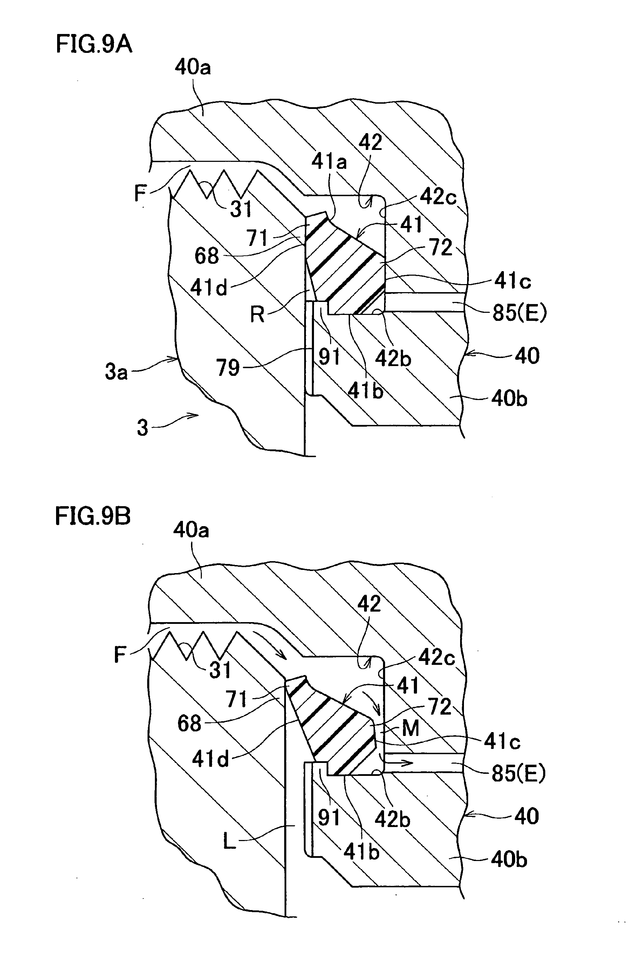

Fig. 9A and Fig. 9B are views similar to Fig. 7A and Fig. 7B, respectively, showing a second exemplary variation of the second embodiment.
This second exemplary variation is different in the following construction from the second embodiment of Fig. 7A and Fig. 7B.
That is, an engagement projection 91 is provided at an opening of the outer peripheral surface 42b of the annular groove 42. The outer peripheral surface 41 b of the gasket 41 is engaged with the engagement projection 91. Further, the escape passage R formed in the outer end surface 41d of the gasket 41 is communicatively connected to the outside via a communicating groove 79 formed in a left surface of the head portion 40b. As in the case of the second embodiment, the corner portion of the annular groove 42 is communicatively connected to the outside via the communicating hole 85 (discharge passage E).

When the tubular casing 40 is loosened and moved rightward with respect to the first female screw hole 31 in a pressurized oil supplying state, as shown in Fig. 9B, the gasket 41 swings around the first annular sealing portion 71 and elastically deforms leftward, and accordingly, the bottom surface 42c of the annular groove 42 is slightly spaced from the second annular sealing portion 72 to form the opening gap M. Therefore, the supplied pressurized oil is discharged to the outside through the fitting gap F, the opening gap M, and the communicating hole 85. During discharge, the gasket 41 is supported on the head portion 40b of the casing 40 via the engagement projection 91, so that it can be prevented from bulging out or falling out.

The above-described embodiments and exemplary variations can be further changed as follows.
Instead of being applied to the illustrated flow control valve 35, the discharge device of the present invention may be applied to a valve with another structure. Further, the discharge device of the present invention is applicable to the plug 36 of Fig. 1B and to an air vent plug described in the conventional technique (Japanese Published Patent Application No. 04-203509), etc.
Fluid equipment using the present invention may be another fluid equipment different from a cylinder unit and a valve unit for a clamp.
Further, the hydraulic fluid may be gas such as compressed air instead of a liquid such as a pressurized oil and the like.

## Claims

1. A pressurized fluid discharge device which discharges a pressurized fluid inside a housing (3) of fluid equipment (1) to the outside of the housing (3), comprising:
a movable member (40) to be attached to a female screw hole (31) opened in an outer surface of the housing (3), wherein the movable member (40) includes a leg portion (40a) which is threaded into the female screw hole (31) and advances and retreats in an axial direction, and a head portion (40b) having an annular groove (42) facing a peripheral wall (68) of the female screw hole (31) at the opening part of the housing (3) in the axial direction, and an annular gasket (41) is fitted to the annular groove (42);
a first annular sealing portion (71) which seals a groove surface of the annular groove (42) provided on at least one of an inner peripheral surface (41a) and an annular inner end surface (41 c) of the gasket (41); and
a second annular sealing portion (72) which seals the peripheral wall (68) of the female screw hole (31) provided on an annular outer end surface (41d) of the gasket (41), wherein
a diameter (D1) of the first annular sealing portion (71) is set to a value smaller than a diameter (D2) of the second annular sealing portion (72).

2. The pressurized fluid discharge device according to Claim 1, wherein
on the inner peripheral surface (41a) of the gasket (41), the first annular sealing portion (71) is provided to seal an inner peripheral surface (42a) of the annular groove (42).

3. The pressurized fluid discharge device according to Claim 1, wherein
on the annular inner end surface (41c) of the gasket (41), the first annular sealing portion (71) is provided to seal a bottom surface (42c) of the annular groove (42).

4. The pressurized fluid discharge device according to Claim 2 or 3, wherein
the first annular sealing portion (71) contains an elastic lip.

5. The pressurized fluid discharge device according to any one of Claims 1 to 3, wherein
the gasket (41) is fixed hermetically to the annular groove (42).

6. The pressurized fluid discharge device according to any one of Claims 1 to 3, wherein
at a position further radially outward than the first annular sealing portion (71), the annular groove (42) is communicatively connected to the outside via an escape passage (R).

7. A pressurized fluid discharge device which discharges a pressurized fluid inside a housing (3) of fluid equipment (1) to the outside of the housing (3), comprising:
a movable member (40) to be attached to a female screw hole (31) opened in an outer surface of the housing (3), wherein the movable member (40) includes a leg portion (40a) which is threaded into the female screw hole (31) and advances and retreats in an axial direction, and a head portion (40b) having an annular groove (42) facing a peripheral wall (68) of the female screw hole (31) at the opening part of the housing (3) in the axial direction, and an annular gasket (41) is fitted to the annular groove (42);
a first annular sealing portion (71) which seals the peripheral wall (68) of the female screw hole (31) provided on an annular outer end surface (41d) of the gasket (41); and
a second annular sealing portion (72) which seals a bottom surface (42c) of the annular groove (42) provided on an annular inner end surface (41c) of the gasket (41), wherein
a diameter (D1) of the first annular sealing portion (71) is set to a value smaller than a diameter (D2) of the second annular sealing portion (72); and
at a position further radially outward than the second annular sealing portion (72), the annular groove (42) is communicatively connected to the outside via a discharge passage (E).

8. The pressurized fluid discharge device according to Claim 7, wherein
the discharge passage (E) is formed in the head portion (40b) of the movable member (40).

9. The pressurized fluid discharge device according to Claim 7, wherein
the discharge passage (E) is formed in the gasket (41).

10. The pressurized fluid discharge device according to any one of Claims 7 to 9, wherein
at a position further radially outward than the first annular sealing portion (71), an outer surface of the gasket (41) is communicatively connected to the outside via an escape passage (R).
